# EUROPÄISCHE PATENTSCHRIFT

(11) **EP 1 091 843 B1**
(45) Veröffentlichungstag und Bekanntmachung des Hinweises auf die Patenterteilung: **30.10.2002**
(21) Anmeldenummer: 99934494.8
(22) Anmeldetag: 07.05.1999
(51) Int. Cl.: B29C 67/00

(54) **SEITLICH ABGEDICHTETE BREITSCHLITZDÜSE ZUR HERSTELLUNG VON GESCHÄUMTEN KUNSTSTOFF-BAHNEN**
SLOT DIE FOR PRODUCING WEBS OF A FOAMED PLASTIC MATERIAL
FILIERE PLATE POUR LA PRODUCTION DE BANDES EN MATIERE PLASTIQUE EXPANSEE

(30) Priorität: 12.06.1998 DE 19826363
(43) Veröffentlichungstag der Anmeldung: 18.04.2001
(73) Patentinhaber: Berstorff GmbH, 30625 Hannover (DE)
(72) Erfinder: BEHRENS, Friedrich-Otto, D-30827 Garbsen (DE)
(74) Vertreter: Meissner, Peter E., Dipl.-Ing.
(86) Internationale Anmeldenummer: DE9901445
(87) Internationale Veröffentlichungsnummer: WO99065666

(56) Entgegenhaltungen:
- EP-A- 0 112 058
- EP-A- 0 538 530
- DE-A- 1 939 565
- GB-A- 779 645
- US-A- 3 210 447
- US-A- 3 975 126
- US-A- 4 631 161
- US-A- 4 961 704

## Beschreibung

Die Erfindung betrifft eine Breitschlitzdüse zur Herstellung von Bahnen aus einem geschäumten Kunststoff, in die in einem Extruder unter erhöhtem Druck plastifizierte und mit einem Treibmittel beladener Kunststoff eintritt und durch deren gekühlten Austrittsspalt der Kunststoff aufschäumend extrudiert wird.

Durch die DE 17 79 374 ist es bereits bekannt geworden, zum Strangpressen von Gegenständen aus geschäumtem thermoplastischem Kunststoff die Breitschlitzdüse unmittelbar in eine Kalibriereinrichtung einmünden zu lassen, die Druckschleusen aufweist, in der Kalibrierwalzen angeordnet sind. Hierdurch soll erreicht werden, daß die stranggepreßten Gegenstände sehr genau kalibriert werden können, wozu es erforderlich ist, den Druck in den Druckkammern entsprechend zu steuern.

Durch die US 2,857,625 ist es auch bereits bekannt geworden, hinter dem Austrittsspalt eines Strangpreßwerkzeuges ein gekühltes Walzenpaar anzuordnen. Hier erfolgt jedoch bereits vor dem Eintritt in den Walzenspalt ein freies Aufschäumen des Kunststoffes, da in dem Raum zwischen dem Austrittsspalt und dem Walzenpaar Atmosphärendruck herrscht.

Die bekannten Lösungen weisen den Nachteil auf, daß es nach dem Austritt aus dem Austrittsspalt der Breitschlitzdüse zu einem Aufschäumen des Kunststoffes kommt, bevor sich beidseitig der Bahn verdichtete Deckschichten aufbauen konnten, so daß Treibmittel vorzeitig entweichen kann. Dieses ist für eine intensive Verschäumung der Bahn nachteilig. Hinzu kommt, daß es zwischen dem Austritt aus der Breitschlitzdüse und dem Walzenspalt in der Bahn zu einer Wellenbildung aufgrund der Querexpansion kommt. Insbesondere bei dem Einsatz von alternativen niedrig siedenden Treibmitteln oder Treibmitteln, wie z.B. N2 und C02, ist es zudem erforderlich, in der Breitschlitzdüse mit höheren Treibmitteidrücken zu arbeiten. Um hier ein akzeptables Aufschäumverhalten sicherzustellen, ist es zudem erforderlich, das Kunststoffmaterial an den Austrittslippen der Breitschlitzdüse so intensiv zu kühlen, daß Deckschichten ausgebildet werden, um so ein unkontrolliertes Aufschäumen des austretenden Materials zu verhindern. Hinsichtlich der Kühlung sind hier jedoch Grenzen vorgegeben, da die notwendige intensive Kühlung dazu führen kann, daß das Kunststoffmaterial in den Austrittslippen stagniert. Hierdurch kommt es zu einer undefinierten Verengung des Austrittsspaltes, wodurch der Druck und die Strömung im Austrittsspalt negativ beeinflußt werden.

Aus der EP 0 112 058 A ist eine Extruderanlage bekannt, die eine Breitschlitzdüse zur Herstellung von Bahnen aus einem geschäumten Kunststoff aufweist. Dieser Kunststoff wird in dem Extruder unter erhöhtem Druck plazifiziert und mit einem Treibmittel versetzt, bevor er in die Breitschlitzdüse eintritt und durch deren Austrittsspalt zum Aufschäumen extrudiert wird. Im unmittelbaren Anschluss an die Breitschlitzdüse ist ein Walzenpaar mit einem Walzenspalt in der Weise vorgesehen, dass der Austrittsspalt der Breitschlitzdüse im Bereich des Eintritts des Walzenspalts (Zwickelbereich) bis an die Oberflächen der Walzen herangeführt ist. Entlang der Breitschlitzdüse sind in Längsrichtung zwei Dichtleisten (26) angeordnet, die den Raum zwischen der Breitschlitzdüse und dem Zwickelbereich der Walzen nach außen in Längsrichtung abdichten. Darüber hinaus sind auch im Seitenbereich, dass heißt an den Enden der Walzen spezielle Dichtelemente vorgesehen, die den Raum im Zwickelbereich zur Seite hin abdichten. Mit dieser Lösung soll erreicht werden, dass der plazifizierte und mit Treibmittel beladene Kunststoff erst nach Verlassen des Walzenspalts aufschäumen kann und vorher unter einem solchen Druck gehalten wird, dass dieses Aufschäumen sicher vermieden wird. Bei dieser Bauform sind also die Walzen außerhalb der Breitschlitzdüse in unmittelbarem Anschluss an den Austrittsspalt der Breitschlitzdüse angeordnet. Hierdurch wird die Abdichtung des unter Betriebsdruck zu haltenden Zwickelbereichs vergleichsweise kompliziert und aufwendig.

Die US 4 631 161 beschreibt eine mit einem Extruder ausgerüstete Anlage zur kontinuierlichen Herstellung von Spritzgießteilen, wie etwa ringförmige Dichtungen. Hierzu wird eine sich drehende Walze eingesetzt, auf deren Mantel gleichmäßig verteilt eine Vielzahl von Formhohlräumen angeordnet ist, die jeweils der Form der herzustellenden Teile angepasst ist. Die Walze läuft in einem aus mehreren Blöcken zusammengesetzten Gehäuse, das einen Austrittsspalt für die erzeugten Produkte und eine zylinderförmige Ausnehmung für die Walze aufweist, so dass die Innenoberfläche der zylinderförmigen Ausnehmung dicht auf der Walze aufliegen kann. Der Extruder ist mit einer Breitschlitzdüse ausgestattet, die einen Teil des Gehäuses bildet, so dass das extrudierte Material während der Drehung der Walze die einzelnen Formhohlräume ausfüllen kann. Durch das dichte Anliegen des Gehäuses an der Oberfläche der Walze werden die einzelnen Formhohlräume während der Abkühlung des eingefüllten Kunststoffmaterials geschlossen gehalten. Um Produkte herstellen zu können, die sowohl auf ihrer Ober- als auch ihrer Unterseite eine bestimmte Formgebung aufweisen, kann auch die Anwendung eines Walzenpaares vorgesehen sein, bei dem beide Walzen mit Formhohlräumen ausgestattet sind, die miteinander zur Bildung der einzelnen Teile korrespondieren. In dieser Schrift finden sich keinerlei Hinweise auf eine Verarbeitung geschäumter Kunststoffe. Das Walzenpaar bildet nicht die Austrittsöffnung für eine Breitschlitzdüse zur Extrusion geschäumter Kunststoffe, sondern hat vielmehr die Funktion eines an eine Extrusionsdüse angeschlossenen Spritzgießwerkzeugs.

Schließlich ist aus der US 3 975 126 eine Extrusionsanlage zur Verarbeitung von Gummi bekannt, bei dem das Material aus einem Extruder in den Einzugsspalt eines profilierten Walzenpaares extrudiert wird. Dieses Walzenpaar ist im Anschluss an die Extrusionsdüse angeordnet, liegt also außerhalb des Gehäuses der Extrusionsdüse.

Der Erfindung liegt die Aufgabe zugrunde, die genannten Nachteile zu vermeiden und eine Breitschlitzdüse zu schaffen, mit der eine Herstellung von Bahnen aus geschäumtem Kunststoff verbunden mit einem kontinuierlichen Aufschäumen des Materials möglich ist.

Diese Aufgabe wird erfindungsgemäß durch die Merkmale des Anspruchs 1 gelöst. Die weitere Ausgestaltung der Erfindung ist den Unteransprüchen zu entnehmen.

Indem der Austrittsspalt von einem in der Breitschlitzdüse seitlich abgedichtet gelagerten Walzenpaar gebildet ist, wird erreicht, daß bereits beim Kontakt mit den Walzenoberflächen aufgrund der Abkühlung vor dem Austrittsspalt, d.h. vor Beginn des Aufschäumvorganges sich auf dem austretenden Kunststoffmaterial verdichtete Deckschichten aus höher viskosem Kunststoffmaterial ausbilden. Da die Walzenpaare rotieren, ergibt sich der Effekt, daß die anliegenden Deckschichten von den Walzen der Walzenpaare durch den Austrittsspalt bewegt werden, ohne daß es zu einem Stagnieren und/oder Anfrieren kommt. Im übrigen gelangt die die Walzen anströmende Kunststoffschmelze stets mit neuen Bereichen der Walzenoberflächen in Kontakt, was die Temperierung der Schmelze positiv beeinflußt. Es besteht so die Möglichkeit, das austretende Material intensiv zu kühlen, so daß es bereits vor dem Austrittsspalt vor Beginn des Aufschäumens zu einer Ausbildung von Deckschichten kommt. Beim nachfolgenden Austritt aus dem Austrittsspalt erfolgt dann ein Aufschäumen des Kunststoffes, wobei jedoch die Deckschichten das Treibmittel im Schaumkem festhalten, so daß es zu einem intensiven inneren Aufschäumen der Bahn kommt Es können somit stark aufgeschäumte Materialien hergestellt werden. Zusätzlich verhindern die Deckschichten eine Wellenbildung in der Bahn, da eine Querexpansion nicht auftreten kann.

Gemäß einer bevorzugten Ausführungsform der Erfindung ist das Walzenpaar als seitliche Abdichtung beidseitig mit je einem als Schmelzedichtung wirkenden Dichtgewinde versehen. Das Dichtgewinde kann entweder als Rückfördergewinde für die extrudierte Schmelze oder aber als Dichtgewinde einer aktiven Schmelzedichtung wirksam sein, wobei dann im Dichtgewinde ein Dichtmittel von außen zugeführt wird. Das Dichtgewinde stellt sicher, daß während des Betriebs der Breitschlitzdüse kein Druckabfall vor dem Austrittsspalt erfolgt.

Im Rahmen der Erfindung kann es außerdem vorgesehen sein, daß die Walzen des Walzenpaares kegelstumpfförmig ausgebildet und axial gegeneinander verschiebbar sind. Eine derartige Ausbildung der Walzen ermöglicht es, durch axiales gegenseitiges Verschieben die Dicke des Austrittsspaltes einzustellen. Die axiale Verstellung der Walzen wird insbesondere auch durch das erfindungsgemäß vorgesehene Dichtgewinde ermöglicht.

In der Zeichnung ist ein Ausführungsbeispiel dargestellt und wird im folgenden näher beschrieben. Es zeigen:
- Fig. 1: einen Querschnitt durch eine Breitschlitzdüse in schematischer Darstellung;
- Fig. 2: eine Draufsicht auf die Breitschlitzdüse gemäß Figur 1;
- Fig. 3: eine Frontansicht eines Walzenpaares der Breitschlitzdüse gemäß Figur 1.

In der Zeichnung ist mit 1 eine Breitschlitzdüse bezeichnet, in deren Einströmkanal 2 eine in einem Extruder aufbereitete, mit Treibmittel beladene Schmelze eingeleitet werden kann. In der Breitschlitzdüse 1 ist ausgangsseitig ein von zwei Walzen gebildetes Walzenpaar 3 angeordnet, das einen Austrittsspalt der Breitschlitzdüse 1 bildet.

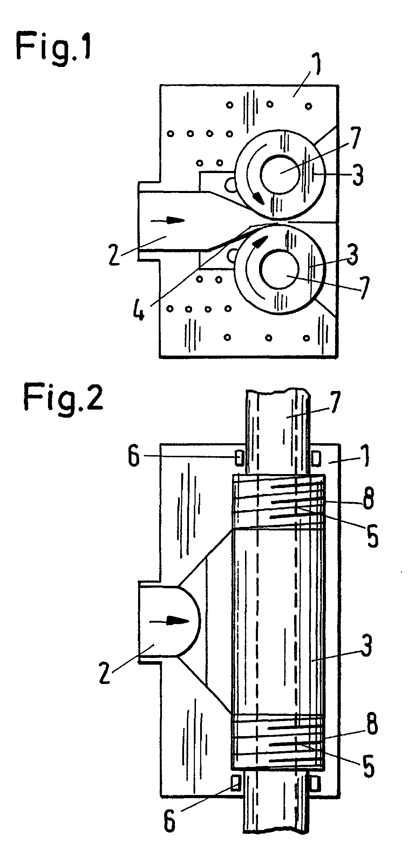

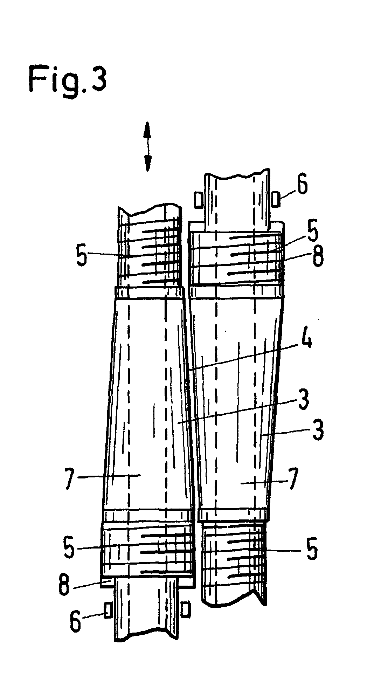

Wie aus den Figuren 2 und 3 ersichtlich, sind die Walzen des Walzenpaares 3 seitlich mit je einem Dichtgewinde 5 versehen. Die Dichtgewinde 5 sind in ihrem Dichtbereich in an sich bekannter Weise von Ausnehmungen im Gehäuse der Breitschlitzdüse 1 dicht umschlossen. Im übrigen sind die Walzen des Walzenpaares 3 in der Breitschlitzdüse 1 in Lagern 6 gehalten. Die Walzen des Walzenpaares 3 können sowohl zylindrisch als auch wie in der Figur 3 der Zeichnung dargestellt, in ihrem den Austrittsspalt 4 bildenden Bereich kegelstumpfförmig ausgebildet sein. Die kegelstumpfförmige Ausbildung der Walzen des Walzenpaares 3 ermöglicht es, durch eine axiale Verstellung der Walzen des Walzenpaares 3 die Dicke des Austrittsspaltes 4 zu verändern und an die Erfordernisse der Extrusion anzupassen. Die Walzen des Walzenpaares 3 sind im übrigen mit einem zentralen Kanal 7 versehen, in den ein Kühlmittel bzw. ein Temperiermittel eingeleitet werden kann.

Die über den Einströmkanal 2 in die Breitschlitzdüse 1 eingeleitete treibmittelhaltige Schmelze gelangt in der Breitschlitzdüse 1 an die Innenseite der rotierenden Walzen des Walzenpaares 3. An der Walzenoberfläche erfolgt dann aufgrund der Abkühlung eine Ausbildung verdichteter Deckschichten aus höher viskosem Kunststoffmaterial auf der Kunststoffschmelze. Die Rotation der Walzen des Walzenpaares 3 bewirkt, daß die anliegenden Deckschichten der Schmelze zusammen mit dieser durch den Austrittsspalt 4 ausgetragen werden, ohne daß es hier zu einem Stagnieren von Schmelze kommt. Es werden so frühzeitig Deckschichten ausgebildet, die den Austrittsspalt 4 ohne Schädigung passieren und beim nachfolgenden Austreten aus dem Austrittsspalt 4 den vorteilhaften Effekt besitzen, daß beim Aufschäumen der Schmelze das Treibmittel nicht aus der Bahn entweichen kann. Es kommt somit zu einem intensiven inneren Aufschäumen der Bahn, so daß sich insgesamt ein optimal aufgeschäumtes Produkt ergibt. Die Deckschichten verhindern zusätzlich eine Wellenbildung in der aufgeschäumten Bahn, da eine Querexpansion unterdrückt wird.

Die an den Walzen des Walzenpaares 3 angeordneten Dichtgewinde 5 verhindern einen Druckabbau vor dem Austrittsspalt 4 der Breitschlitzdüse 1. Die im Gehäuse der Breitschlitzdüse 1 vorgesehene Aufnahme 8 wird im Bereich des Dichtgewindes 5 sicher abgedichtet. Alternativ ist es möglich, dem Dichtgewinde 5 in ansich bekannter Weise rückseitig abdichtende Schmelze zuzuführen.

## Patentansprüche

1. Breitschlitzdüse (1) zur Herstellung von Bahnen aus einem geschäumten Kunststoff, in die in einem Extruder unter erhöhtem Druck plastifizierter und mit einem Treibmittel beladener Kunststoff eintritt und durch deren Austrittsspalt (4) der Kunststoff aufschäumend extrudiert wird, wobei der Austrittsspalt (4) durch den Walzenspalt eines Walzenpaars (3) gebildet wird, durch den der plastifizierte Kunststoff unter einem solchen Druck führbar ist, dass dessen Aufschäumen erst nach Verlassen des Walzenspalts eintritt,
**dadurch gekennzeichnet,**
**dass** das Walzenpaar (3) im Gehäuse der Breitschlitzdüse (1) angeordnet und zur Verhinderung eines Druckabbaus in dem plastifizierten Kunststoff vor dem Austritt aus dem Austrittsspalt (4) im Gehäuse der Breitschlitzdüse (1) seitlich abgedichtet gelagert ist.

2. Breitschlitzdüse (1) nach Anspruch 1,
**dadurch gekennzeichnet,**
**dass** das Walzenpaar (3) als seitliche Abdichtung beidseitig mit je einem als Schmelzedichtung wirkenden Dichtgewinde (5) versehen ist, das entweder als Rückfördergewinde oder als Dichtgewinde einer aktiven Schmelzedichtung wirksam ist.

3. Breitschlitzdüse (1) nach Anspruch 1,
**dadurch gekennzeichnet,**
**dass** die Walzen des Walzenpaares (3) kegelstumpfförmig ausgebildet und axial gegeneinander verschiebbar sind, derart, dass die Dicke des Austrittsspaltes (4) einstellbar ist

## Claims

1. Slot die (1) for the manufacture of webs made of a foamed plastic material, into which passes, in an extruder under increased pressure, plasticized plastic material charged with a foaming agent, and through whose outlet slot (4) the plastic material is extruded, expanding during the extrusion process, the outlet slot (4) being formed by the roller gap of a pair of rollers (3), through which can be passed the plasticized plastic material under a pressure at which it does not begin to foam up until after it has left the roller gap,
**characterised in that**
the pair of rollers (3) is positioned inside the housing of the slot die (1), and is mounted in the housing of the slot die (1) in such a way that it is sealed off at the sides in order to prevent a reduction in pressure in the plasticized plastic material prior to its exit from the outlet slot (4).

2. Slot die (1) as in Claim 1,
**characterised in that**
the pair of rollers (3) has at each side, as a lateral seal, a sealing thread (5) acting as a melt seal, operating either as a return screw thread or as the sealing thread of an active melt seal.

3. Slot die (1) as in Claim 1,
**characterised in that**
the rollers of the roller pair (3) are tapered in shape and can be moved axially against each other in such a way that the depth of the outlet slot (4) can be adjusted.

## Revendications

1. Filière plate (1) pour fabriquer des bandes en une matière synthétique expansée, dans laquelle de la matière synthétique chargée par un agent moussant et plastifiée dans une extrudeuse sous une pression élevée entre et par la fente de sortie (4) de laquelle la matière synthétique est extrudée en moussant, la fente de sortie (4) étant formée par la fente d'une paire de cylindres (3) à travers laquelle la matière synthétique plastifiée peut être guidée sous une pression telle que son expansion se produit uniquement après avoir quitté la fente des cylindres,
**caractérisée en ce que** la paire de cylindres (3) est agencée dans le boîtier de la filière plate (1) et est montée de façon étanchéifiée latéralement dans le boîtier de la filière plate (1) pour empêcher une chute de pression dans la matière synthétique plastifiée avant la sortie de la fente de sortie (4).

2. Filière plate (1) selon la revendication 1,
**caractérisée en ce que** la paire de cylindres (3) est munie, comme étanchéification latérale, des deux côtés, d'à chaque fois un filet d'étanchéité (5) agissant comme étanchéification de la matière en fusion, qui agit soit comme filet de retour ou comme filet d'étanchéité d'une étanchéification active de la matière en fusion.

3. Filière plate (1) selon la revendication 1,
**caractérisée en ce que** les cylindres de la paire de cylindres (3) sont réalisés de façon tronconique et peuvent être déplacés axialement l'un par rapport à l'autre, de sorte que la largeur de la fente de sortie (4) peut être réglée.
